# EUROPEAN PATENT APPLICATION

(11) **EP 0 857 694 A2**
(43) Date of publication of application: **12.08.1998**
(21) Application number: 98200219.8
(22) Date of filing: 27.01.1998
(51) Int. Cl.: C02F 1/00

(54) **Method for stabilising halogen disinfectant in aqueous system**

(30) Priority: 29.01.1997 US 790988
(71) Applicant: FMC CORPORATION, Philadelphia, PA 19103 (US)
(72) Inventor: Kramer, Jeffrey F., Robbinsville, New Jersey 08691 (US); O'Brien, Frank, Keyport, New Jersey 07735 (US)
(74) Representative: Hamilton, Raymond

(57) **Abstract**

The useful life of halogen disinfectants in aqueous systems such as swimming pools is increased by addition to the aqueous system of a minor amount of a triazine of the formula 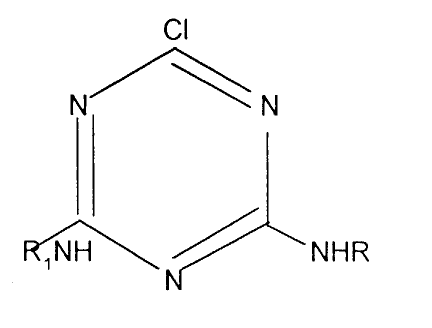 wherein R₁ and R₂ are alkyl (C₂ - C₅, same or different) or cycloalkyl (C₃ - C₆, same or different).

## Description

This invention relates to improved halogen based compositions for use in the treatment of water and processes for the treatment of water in order to control microbiological growth. The invention finds particular application in the treatment of swimming pools and in recirculating cooling water systems with a halogen.

In this specification and claims, unless otherwise indicated, "halogen" or "chlorine" means and includes elemental chlorine, iodine or bromine, active halogen compounds, or active halogen releasing agents where the halogen is chlorine, iodine or bromine.

The water in a swimming pool or cooling water system could be maintained fresh by the use of a continuous supply of fresh water. The large quantity of water required renders such maintenance unattractive and in practice the water in such swimming pools or cooling water systems is normally recirculated. The recirculating water is usually filtered to remove debris and treated with a disinfectant system in order to remove microbiological contamination. One of the most widely used of all disinfectants is chlorine which is a powerful oxidising agent and biocide. One disadvantage associated with the use of chlorine is that it is rapidly destroyed by ultra-violet light. In cooling water systems chlorine is stripped from the water as it circulates over a cooling water tower. For this reason, it is necessary to continuously add the chlorine to the swimming pools and cooling water systems in order to maintain the desired concentration of chlorine.

There have been proposals to incorporate additives into the water which serve to stabilise the chlorine in the system and thereby reduce the amount of chlorine which need be added. In particular heterocyclic compounds comprising a secondary nitrogen group such as isocyanuric acid, dimethyl hydantoin, and oxazolidinone have been added to chlorine containing systems.

A variety of other additives are commonly added to swimming pools and cooling water systems. One example is algicides, which are added to suppress the growth of algae which might otherwise fluorish. US Patent 4659359 discloses the use of 2-chloro-4, 6-diamino-s-triazines of the formula I 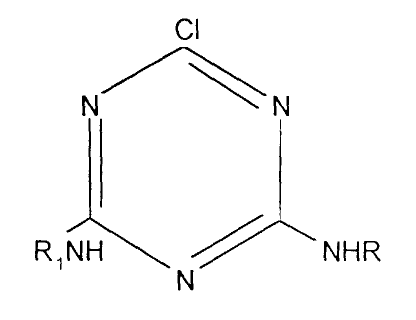 wherein R₁ represents an alkyl group having from 2 to 5 carbon atoms or a cycloalkyl group comprising from 3 to 5 carbon atoms and R₂ represents an alkyl group comprising from 3 to 5 carbon atoms or a cycloalkyl group comprising from 3 to 5 carbon atoms in combination with a halogen which is preferably chlorine or an agent which releases chlorine. This patent teaches the use of the amount of triazine of formula I which is required to prevent the growth of algae when used in combination with the chlorine. In an example of a swimming pool the chlorine concentration was maintained in the range 1.2 to 2.0 ppm and the triazine concentration in the range 0.5 to 1.0 ppm.

We have now discovered that the 2-chloro-4, 6-diamino-s-triazines are effective as stabilisers of halogen disinfectants in aqueous systems, i.e., such triazines extend the useful life of the halogen disinfectant in a system. This effect is manifest using concentrations of triazine which are less than are required to suppress algal growth. This discovery is useful insofar as the addition of an appropriate quantity of a triazine to a chlorine containing aqueous system means that the chlorine concentration persists and requires less frequent replenishment. It also means that the amount of chlorine in a swimming pool or cooling water system can be reduced in the presence of a triazine to levels not previously considered useful to disinfect the water. This can be of great value in systems where the maximum chlorine content of discharged waters is fixed by regulation or when it is desirable to reduce the chlorine level, e.g. in a swimming pool to improve its acceptability to the user.

The triazines which have been discovered to be useful are compounds having the formula I, wherein R₁ and R₂, which may be the same or different, represent alkyl groups comprising from 2 to 5 carbon atoms or cycloalkyl groups comprising from 3 to 6 carbon atoms. Accordingly, in one aspect this invention provides a method for maintaining the concentration of a halogen in an aqueous system at a level which is effective to disinfect the system, characterized in that an effective quantity of such a triazine is added to the aqueous system.

The halogen may be added to the system either in the elemental state, as an agent which releases elemental or active halogen, or as an active halogen compound. By "active" is meant effective for disinfection when used alone or chemically combined. Halogen disinfectants therefore include elemental chlorine, bromine and iodine, and compounds containing one or more of these elements in the active state or which release elemental or chemically combined active halogen, including mixed halogens. Representative are hypochlorous acid, hypochlorites, chloride of lime, chloramines, trichloroisocyanuric acid, sodium dichloroisocyanuric acid, dichloro dimethyl hydantoin, chlorobromo dimethyl hydantoin and iodophores. Chlorine gas, iodine or bromochloride may also be fed directly to the system. Many other halogen disinfectants will be immediately apparent.

In the formula I, R₁ may represent a branched or a straight chain alkyl group, such as an ethyl group, a propyl group, an isopropyl group, an n-butyl group, an iso-butyl group and tertiary butyl group. R₂ may also be a branched or straight chain alkyl group such as an ethyl group, an propyl group, isopropyl group, n-butyl group, an isobutyl group, or a tertiary butyl group. Where R₁ and R₂ represent a cycloalkyl group, they may represent a cyclobutyl group, a cyclopentyl group or a cyclopropyl group.

The preferred compound of formula I for use in this invention is 2-chloro-4-ethylamino-6-tertiary butylamino-s-triazine, i.e. the compound wherein R₁ represents an ethyl group and R₂ represents a tertiary butyl group.

The compound of formula I and the source of halogen, e.g., chlorine, are normally added separately to the aqueous system. Initially, a sufficient quantity of these disinfectants and triazines will be added to a fresh water charge as will produce the desired concentrations. Thereafter, the concentration of the reagents in the system will be monitored periodically and make-up quantities of reagents added so as to maintain their concentrations within the desired ranges. The halogen stabilising effect produced by the presence of the triazine of formula I reduces the frequency with which the halogen needs to be charged to the system. This is advantageous on grounds of cost of raw material and also on the ground of improved efficiency since the halogen content of the water can be measured at more infrequent intervals.

The water in a typical swimming pool will have a pH of from 7.2 to 7.8, an alkalinity of from 80 to 150 ppm (as calcium carbonate), and a calcium and magnesium hardness of from 200 to 300 ppm (as calcium carbonate). When the halogen is chlorine, the chlorine content of water in a swimming pool is normally maintained at a level of from 1.0 ppm to 2.0 ppm (measured as hypochlorous acid, HOCl). In the absence of a stabiliser for the chlorine, the water in a typical outdoor swimming pool which is exposed to UV light must be analysed and replenished at least once per day in order to ensure that the level of chlorine is maintained within the desired range. In the presence of from 0.05 to 0.5 ppm of a triazine of formula I, the frequency of replenishment can be reduced to every two days and perhaps every three days.

The triazine is lost relatively slowly from a circulating pool system. The concentration of triazine which is initially added to a fresh water system will generally be in proportion to the concentration of halogen which it is desired to maintain. It will normally be unnecessary to replenish the triazine in the system on each occasion that the halogen is replenished. The concentration of the triazine and the halogen should preferably be maintained within the ranges recited above. The level of halogen should always be sufficient to provide adequate disinfection. The level of halogen can exceed the preferred ranges, but this is inefficient and wasteful.

The concentration of triazine should also be within the preferred range and more preferably within the range 0.05 to 0.3 ppm. If the concentration falls below the effective quantity, the consumption of halogen will be seen to increase. In this event some additional triazine should be added usually when the halogen is replenished.

The additives of this invention can and normally will be used in conjunction with other additives, known to be useful in the art of swimming pool maintenance. Among the commonly used additives are sodium hydroxide, sodium carbonate, sodium bicarbonate, and sodium sesquicarbonate for increasing the pH of the water, sodium bisulphate or hydrochloric acid for decreasing the pH of the water, and calcium or magnesium salts such as calcium chloride, magnesium chloride, calcium carbonate and magnesium carbonate for increasing the hardness of the water. In addition a variety of additives for controlling color, algae growth, pool liner staining, foaming, and other problems are known in the art of swimming pool maintenance. Polymers, antifoams, algicides, chelating agents, and sequestering agents are all known to be potentially useful additives.

In a circulating cooling water system, when the halogen disinfectant is chlorine, the concentration of the chlorine may be maintained at a higher level particularly where chlorine consuming impurities are present in the water. Typically such circulating systems may comprise from 0.5 to 3.0 ppm of chlorine (as hypochlorous acid). The amount of triazine of formula I may be increased in proportion if the same degree of chlorine stability is desired. Effective concentrations of other halogens are similar.

The Examples which follow illustrate the halogen stabilization effect of 2-chloro-4-ethylamino-6-tertiary butylamino-s-triazine. Throughout the examples, "chlorine" or "free chlorine" means hypochlorous acid (HOCl), and the concentration of "chlorine" or "free chlorine" means the concentration of chlorine as hypochlorous acid.

### Example 1

### Determination of chlorine stability in synthetic algal nutrient medium

Sodium hypochlorite was added to two flasks containing sterile synthetic algal nutrient medium in an amount necessary to give the desired concentration. 2-chloro-4-ethylamino-6-tertiary butylamino-s-triazine was added to one of the chlorine containing flasks at a concentration of 0.1 ppm. The flasks were incubated at 23°C in ambient indoor light. Free chlorine levels were periodically determined by the DPD method using a Hach DR/3000 spectrophotometer. The results are summarized in Table 1.

**Table 1**

| Chlorine stability in synthetic algal nutrient medium | | |
|---|---|---|
| Time, hours | Chlorine Concentration, ppm free | |
| | Control | 0.1 ppm triazine |
| 0 | 0.32 | 0.30 |
| 1 | 0.27 | 0.28 |
| 3 | 0.24 | 0.26 |
| 6 | 0.11 | 0.16 |

As can be seen from Table 1, the addition of the triazine has a stabilising effect on the free chlorine level.

### EXAMPLE 2

### Action in a model swimming pool

The model swimming pools were located indoors and each consisted of:
(a) a glass tank having a volume of 10 gallons,
(b) a Little Giant Model 1 submersible pump (1.7 gallons/hour).
(c) an in-line, cartridge-type cellulose filter (nominal 20 micron filtration),
(d) a thermostat regulated heater/chiller, and
(e) a cover with a cool white fluorescent light (325 lumens).

Each model swimming pool was filled with tap water. At the time of filling, 4.2 grams of Miracle-Gro plant food was added to each model swimming pool and the pools were allowed to equilibrate for 24 hours. After the 24 hour equilibration period, the temperature was adjusted to 24°C± 1 with the circulation pump running and the filter in place. Using a timer, a 16 hour photoperiod was maintained over each model swimming pool. Each model swimming pool was inoculated with 20 ml each of a three-week old culture of Chlorella vulgaris and Phormidium inundatum. Each model swimming pool was also inoculated with 1 ml each of a suspension of growth made from an overnight agar plate culture of Escherichia coli and

### Enterococcus faecalis.

Pairs of model swimming pool were treated with:
1. sodium dichloroisocyanuric acid daily to maintain 0.3 ppm free chlorine.
2. sodium dichloroisocyanuric acid daily to maintain 0.5 ppm free chlorine.
3. sodium dichloroisocyanuric acid daily to maintain 0.8 ppm free chlorine.

One model swimming pool in each pair was treated with 0.3 ppm of the triazine. The other model swimming pool in each pair was treated with 3 ppm of the algicide poly[oxyethylene-(dimethylimino)-ethylene-(dimethylimino)-ethylene dichloride] (commonly known as and hereinafter referred to as "polyquat"). Conditions were maintained for four weeks. Evaporated water was replaced on a weekly basis. The model swimming pools were retreated at 50% of the initial dose with triazine and polyquat after two weeks. After four weeks, the addition of sodium dichloroisocyanuric acid was stopped and the free chlorine level in the model swimming pools was monitored daily by the DPD method using a Hach DR/3000 spectrophotometer. The results are summarized in Table 2.

**TABLE 2**

| Time, Days | Chlorine Concentration, ppm free | | | | | |
|---|---|---|---|---|---|---|
| | 0.3 ppm Chlorine | | 0.5 ppm Chlorine | | 0.8 ppm Chlorine | |
| | 0.3 ppm triazine | 3 ppm polyquat | 0.3 ppm triazine | 3 ppm polyquat | 0.3 ppm triazine | 3 ppm polyquat |
| 0 | 0.35 | 0.29 | 0.51 | 0.53 | 0.78 | 0.83 |
| 1 | 0.25 | 0.10 | 0.23 | 0.12 | 0.22 | 0.12 |
| 2 | 0.14 | 0.01 | 0.18 | 0.02 | 0.17 | 0.03 |
| 3 | 0.04 | 0.00 | 0.07 | 0.00 | 0.02 | 0.00 |
| 5 | 0.01 | 0.00 | 0.04 | 0.00 | 0.02 | 0.00 |

It can be seen from Table 2 that the triazine maintained higher free chlorine levels in solution than the polyquat after the final addition of sodium dichloroisocyanuric acid. Free chlorine levels were 45 to 60 percent higher with the triazine after one day compared to the polyquat. The triazine also maintained free chlorine levels in solution for a longer period of time than the polyquat. Free chlorine levels decreased to zero within three days with the polyquat whereas free chlorine was still detectable with the triazine after five days.

### EXAMPLE 3

In another test, model swimming pools were treated with:
1. 0.1 ppm of triazine
2. 0.3 ppm of triazine
3. 1 ppm of polyquat
4. 3 ppm of polyquat

Each model swimming pool was treated with sodium dichloroisocyanuric acid twice weekly to achieve 1.5 ppm free chlorine. Conditions were maintained for four weeks. After two weeks, the model swimming pools were retreated at 50% of the initial dose with triazine and polyquat. The free chlorine level in the model swimming pools was monitored daily by the DPD method using a Hach DR/3000 spectrophotometer. The amount of sodium dichloroisocyanuric acid added to the model swimming pools over the course of the test was recorded. The results are summarized in Table 3.

**Table 3**

| Condition | Average chlorine concentration, ppm free | Total sodium dichloroisocyanuric acid usage, grams |
|---|---|---|
| 0.1 ppm triazine | 0.90 | 5.57 |
| 0.3 ppm triazine | 0.88 | 5.57 |
| 1 ppm polyquat | 0.73 | 6.08 |
| 3 ppm polyquat | 0.78 | 6.08 |

As can be seen in Table 3, the average free chlorine level in solution was higher with the triazine than with the polyquat. Furthermore, less sodium dichloroisocyanuric acid was needed to achieve the higher average free chlorine level with the triazine than with the polyquat.

## Claims

1. A method for maintaining the concentration of halogen in an aqueous system at a level which is effective in disinfecting the system, comprising adding to the system in an amount effective to stabilize the halogen, a triazine having the general formula I 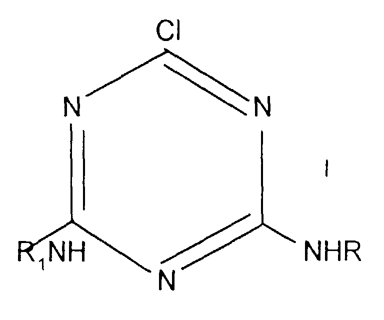 wherein R₁ and R₂ which may be the same or different represent alkyl groups comprising from 2 to 5 carbon atoms or cycloalkyl groups comprising from 3 to 6 carbon atoms.

2. A method according to claim 1 wherein the concentration of halogen is in the range 0.05 to 3.0 ppm and the concentration of triazine is in the range 0.05 to 0.5 ppm.

3. A method according to claim 1 wherein the concentration of halogen is in the range 0.05 to 1.0 ppm.

4. A method according to any one of claims 1 to 3 wherein the halogen is chlorine, an active chlorine compound or an active chlorine releasing agent.

5. A method according to any one of claims 1 to 3 wherein the triazine in the halogen containing aqueous system is a compound having the formula I wherein R₁ and/or R₂ represent an ethyl, propyl, isopropyl, n-butyl, iso-butyl, tertiary butyl or isoamyl group.

6. A method according to any one of claims 1 to 3 wherein R₁ and/or R₂ of the triazine in the halogen containing aqueous system represent a cyclobutyl, cycopentyl or cyclopropyl group.

7. A method according to claim 5 wherein at least one of R₁ and R₂ of the triazine in the halogen containing aqueous system represents an ethyl group.

8. A method according to any one of claims 1 to 3 or claims 4 to 7 wherein the triazine in the halogen containing aqueous system is 2-chloro-4-ethylamino-6-tertiary butylamino-s-triazine.

9. A method according to claim 8 wherein the concentration of triazine in the halogen containing aqueous system is in the range 0.05 to 0.3 ppm.
